# EUROPEAN PATENT SPECIFICATION

(11) **EP 4 197 139 B1**
(45) Date of publication and mention of the grant of the patent: **18.11.2026**
(21) Application number: 20829858.8
(22) Date of filing: 15.12.2020
(51) Int. Cl.: H04L 1/12, H04L 1/16, H04L 1/18

(54) **DEVICE AND METHOD FOR SELECTIVE RETRANSMISSION OF LOST PACKETS**
VORRICHTUNG UND VERFAHREN ZUR SELEKTIVEN WIEDERÜBERTRAGUNG VON VERLORENEN PAKETEN
DISPOSITIF ET PROCÉDÉ DE RETRANSMISSION SÉLECTIVE DE PAQUETS PERDUS

(43) Date of publication of application: 21.06.2023
(73) Proprietor: Huawei Technologies Co., Ltd., Shenzhen, Guangdong 518129 (CN)
(72) Inventor: BELKAR, Ben-Shahar, 80992 Munich (DE); COHEN, Reuven, 80992 Munich (DE)
(74) Representative: Roth, Sebastian
(86) International application number: PCT/EP2020/086128
(87) International publication number: WO 2022/128066

(56) References cited:
- EP-A1- 1 204 249
- US-A- 5 222 061
- US-A1- 2010 058 138
- US-A1- 2014 129 893

## Description

### TECHNICAL FIELD

The present disclosure relates to communication networks, and more particularly to data reliability in data transmission of communication networks. The disclosure proposes a device and method for selective retransmission of lost packets.

### BACKGROUND

In data networks, when two computers communicate with each other, it is often necessary to ensure data reliability. To this end, the sender attaches a sequence number to each data packet and the receiver informs the sender which data packets have been received and which data packets are missing. The sender must retransmit the missing data packets until the receiver receives all data packets.

Protocols for ensuring data reliability can be classified into three main categories: Stop-and-Wait, go-back-N and Selective-Repeat.

In Stop-and-Wait the sender sends the packet and waits for the acknowledgement (ACK) of the packet. Once the ACK reaches the sender, it transmits the next data packet. If the ACK is not received, it re-transmits the previous data packet again.

In go-back-N, a receiver that has received all data packets up to packet number N is willing to accept only packet number N + 1. If packet N + 1 is not received, but a packet with a higher sequence number is received, e.g., N + 2 or higher, the receiver drops this out-of-order packet. When the sender is informed that data packet N + 1 was lost, it knows that it must retransmit not only this data packet, but also all succeeding packets.

In Selective-Repeat, the receiver is willing to accept packets that are received out of order. The receiver places these packets in a reordering buffer, or directly places them if direct data placement (DDP) headers exist. It then informs the sender only about missing packets, and the sender retransmits only the missing packets.

However, the existing solutions of missing packet retransmission suffer from one or more of the following problems. In some solutions, the sender is informed multiple times about a missing packet, and may retransmit a missing packet more than necessary. Some solutions require many logical timers, and the operation is difficult. Adjusting the time-out is a very difficult task, especially because a round-trip-time (RTT), i.e., the time between sending a packet and receiving an ACK for it, may vary very often. Wrong estimation of the RTT may result either in an unnecessary retransmission (if the time-Out is too short), or an extra delay (if the time-Out is too long).

US 2010/058138 A1 discloses a method and system for large data transfer between a sender and a receiver. US 5 222 061 A discloses a method to control unnecessary multiple retransmissions of a data packet including tracking in a list the sequence numbers of transmitted data packets. EP 1 204 249 A1 discloses a packet retransmission system for retransmitting a packet where a sequence number is added between the transmission apparatus and the reception apparatus at a loss of the packet in packet transmission.

### SUMMARY

In view of the above-mentioned limitations, embodiments of the present disclosure aim to introduce a new protocol for efficiently retransmission of lost packets, particularly for selective retransmission of lost packets. An objective is to allow the sender to retransmit only lost packets, without relying on a per-packet timer and without waiting for a long time-out if the first retransmission does not succeed.

The objective is achieved by embodiments as provided in the enclosed independent claims. Advantageous implementations of the embodiments are further defined in the dependent claims.

### BRIEF DESCRIPTION OF DRAWINGS

The above described aspects and implementation forms of the present disclosure will be explained in the following description of specific embodiments in relation to the enclosed drawings, in which
- FIG. 1: shows an example of go-back-N approach.
- FIG. 2: shows an example of Selective-Repeat approach.
- FIG. 3: shows an ambiguity problem of Selective-Repeat approach.

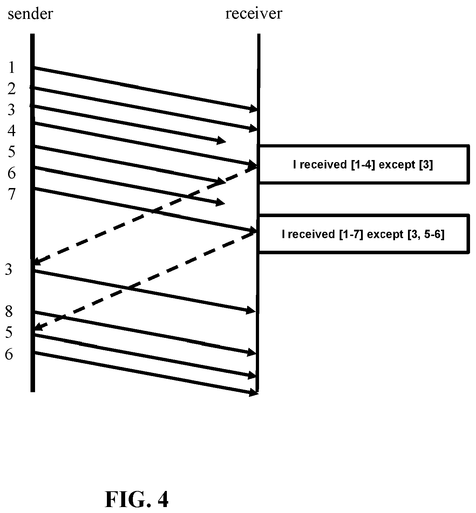

- FIG. 4: shows an example of Selective-Repeat approach.
- FIG. 5: shows an example of Selective-Repeat approach.
- FIG. 6: shows a first network device according to an embodiment of the disclosure.
- FIG. 7: shows an example of Light Efficient Retransmission Protocol (LERP) according to an embodiment of the disclosure.
- FIG. 8: shows an example of LERP according to an embodiment of the disclosure.
- FIG. 9: shows an example of LERP according to an embodiment of the disclosure.
- FIG. 10: shows an example of LERP according to an embodiment of the disclosure.
- FIG. 11: shows a second network device according to an embodiment of the disclosure.
- FIG. 12: shows an example where in-order delivery is not guaranteed.
- FIG. 13: shows a method according to an embodiment of the disclosure.
- FIG. 14: shows a method according to an embodiment of the disclosure.

### DETAILED DESCRIPTION OF EMBODIMENTS

Illustrative embodiments of methods, devices, and program product for efficient packet retransmission in a communication system are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

As previously discussed, protocols for ensuring data reliability can be classified into three main categories: Stop-and-Wait, go-back-N and Selective-Repeat.

For example, a sender sends packets 1-5, and only packet number 3 is lost. In a go-back-N scenario, the sender will retransmit packets 3-5, while in a Selective-Repeat scenario, the sender will retransmit only packet number 3.

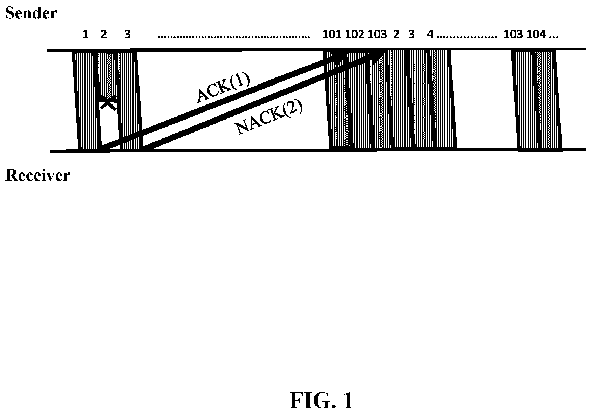

FIG. 1 shows a case where in go-back-N, the sender sends 103 packets before it is informed by a negative ACK (NACK) that packet 2 is missing. The sender therefore may retransmit not only packet 2, but also packets 3-103. Only after that, the sender can continue transmitting new packets (from 104 and up).

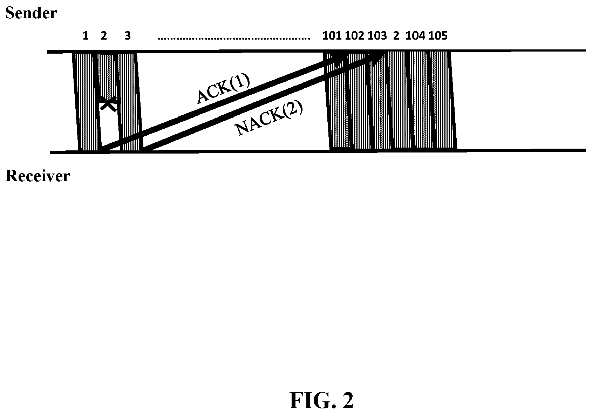

An example depicted in FIG. 2 shows a similar situation, but with Selective-Repeat. Here, when the sender is informed that packet number 2 is missing, it retransmits only this packet (i.e., packet number 2), and then it can continue transmitting new packets.

Notably, Selective-Repeat is a more efficient protocol, since only packets that fail to reach the receiver are retransmitted. However, the implementation of Selective-Repeat is more difficult than that of go-back-N, for two main reasons. The first is that Selective-Repeat requires the receiver to store out-of-order packets, or on other cases ask for additional DDP header. The second is that informing the sender, which packets have been received and which are missing, is a difficult task in an asynchronous and unreliable network. In particular, it is possible that the receiver informs the sender that a packet is missing, while a (re)transmission of this packet is on its way and will reach the receiver quite soon. Thus, a Selective-Repeat sender always has the difficulty of deciding whether or not to obey a retransmission request.

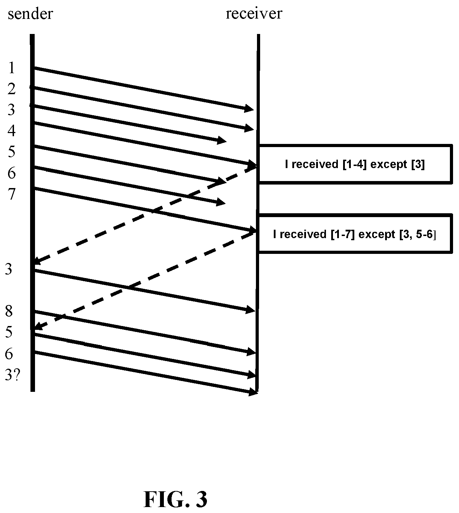

For example, a situation is as shown in FIG. 3. In particular, after receiving packet 4, the receiver understands that packet 3 is lost, because if it was not lost it should have been received before packet 4. The receiver may inform the sender of this. It could send a NACK, optionally the receiver may inform the sender about all the packets it has received and the packet it has not received in one notification message.

When the sender receives this notification message, it retransmits packet number 3. But sometime later it receives another notification message, which indicates that packets 5-6 are also lost. This further notification message also informs that packet 3 is (still) missing. When the sender receives this further notification message, it does not know what the status of the retransmitted copy of packet 3 is. On one hand, if it ignores the fact that this further notification message indicates that packet 3 is (still) missing, then it would never be able to know that the retransmitted copy of packet 3 is lost. On the other hand, if it retransmits packet 3 once again, but the previous retransmission was received by the receiver, then this second retransmission is a waste of resources.

One way to address the above problem is that each the sender always obey the first retransmission request for any packet. But once the sender retransmits a packet, it starts a timer and if this timer expires before an ACK is received for this packet, the packet is retransmitted again.

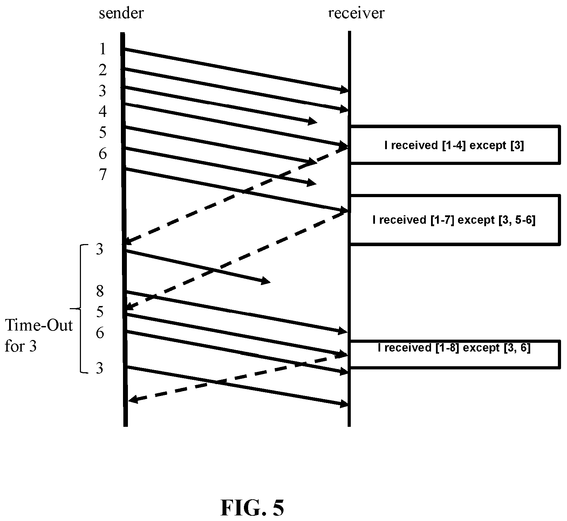

In this case, the sender will always retransmit a packet as a response to a NACK. But if the retransmission is lost, the only way for the sender to know about the loss is to associate a timer with each retransmission. If this retransmission is not ACKed within a timeout period, it is retransmitted again. This is shown in FIG. 5. It should be note that FIG. 5 does not show all notification messages that are sent or can be sent. In this figure, the second retransmission of packet 3 is done following a timeout.

However, there are two problems with the above approach. First, it requires many logical timers. The operation of these timers is difficult, especially when implementing the protocol on hardware. Second, the protocol needs to adjust the time-out, which is a very difficult task. This is especially because an RTT may vary very often in practice. Wrong estimation of the RTT may result either in an unnecessary retransmission (in case the time-out is too short), or in extra delay (in case the time-out is too long).

To address the aforementioned limitations and deficiencies, embodiments of this disclosure propose a new protocol for selective retransmission of lost packets. This protocol is called Light Efficient Retransmission Protocol (LERP). One of the most important property of LERP is that it allows the sender to retransmit only lost packets, without relying on a per-packet timer and without waiting for a long time-out if the first retransmission does not succeed.

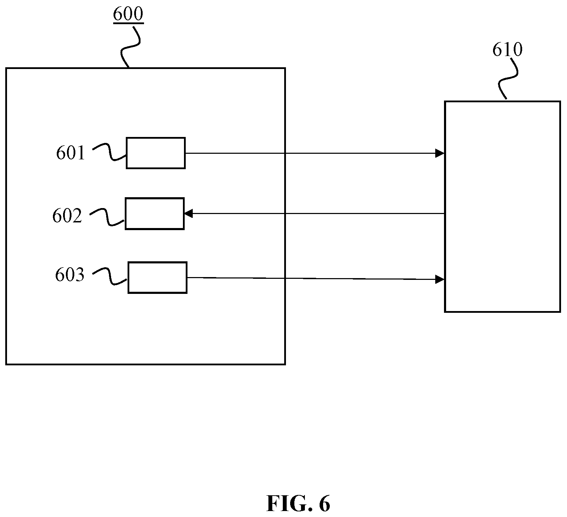

FIG. 6 shows a first network device 600 according to an embodiment of the disclosure. The first network device 600 may comprise processing circuitry (not shown) configured to perform, conduct or initiate the various operations of the first network device 600 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The first network device 600 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the first network device 600 to be performed. In one embodiment, the processing circuitry comprises one or more processors and a non-transitory memory connected to the one or more processors. The non-transitory memory may carry executable program code which, when executed by the one or more processors, causes the first network device 600 to perform, conduct or initiate the operations or methods described herein.

In particular, the first network device 600 is configured to transmit a sequence of data packets 601 to a second network device 610. Thus, the first network device 600 may be referred to as "sender" and the second network device 610 as "receiver", particularly in comparison with the sender and receiver shown in the previous figures. The first network device 600 is further configured to receive at least one notification message 602 from the second network device 610. In particular, the at least one notification message 602 is indicative of a largest sequence number L of a data packet among sequence numbers of data packets that have been received at the second network device 610 and one or more data packets 603 of the sequence of data packets that are missing at the second network device 610 up to the largest sequence number L. Then, the first network device 600 is particularly configured to retransmit one or more data packets 603 as the next step after receiving the at least one notification message 602, wherein each of the one or more missing data packet 603 is indicated as a missing data packet after its first transmission by the at least one notification message 602, and a sequence number X of the each missing data packet 603 is less than L - K, where K is a parameter that is a non-negative integer.

That is, when the receiver, i.e., the second network device 610, informs the sender, i.e., the first network device 600, for the first time that a packet is lost (by using the at least one notification message 602), the first network device 600 can immediately retransmit this packet, if a sequence number X of the each missing data packet 603 is less than L - K. There is no risk that this retransmission is spurious because there are no outstanding copies of this packet in the way to the second network device 610. Notably, as previously discussed, a packet is missing at the receiver may be indicated by a NACK. The at least one notification message 602 may comprise ACKs, and/or NACKs. An ACK may indicate that a certain packet has been received by the second network device 610, and a NACK may indicate that a certain packet is missing at the second network device 610. Thus, the problem of deciding when to obey to a NACK and when not is relevant only after a packet is retransmitted, and the first network device 600 keeps receiving NACKs for this packet, as is the case for packet 3 as shown in FIG. 3.

An idea of the proposed protocol is, that when the sender, i.e., the first network device 600, retransmits a packet, e.g., packet X, X being a sequence number of the packet, it remembers a sequence number of the last packet (e.g., packet Y) transmitted for the first time, i.e., Y. Taking a scenario in which K = 1 as an example, when the first network device 600 receives an ACK for a packet whose sequence number is larger than Y, it knows that by that time it should have received an ACK for the retransmitted copy of packet X. If such ACK was not received, the retransmitted copy of packet X must have been lost, and packet X may be retransmitted again.

Notably, the at least one notification message 602 may comprise at least one of an ACK, a NACK, or a SACK. Notably, the SACK may indicate which packets in a set of packets are acknowledged (either negatively or positively).

In particular, in an in-order packet routing case, when the first network device 600 is informed that a packet L has been received by the second network device 610 (receiver), but a packet X (where X < L) is not, the first network device 600 knows that the packet X is missing. However, the network does not necessarily ensure in-order packet routing, thus the proposed protocol introduces the parameter K, which indicates how many packets can bypass a certain packet when they are all sent from the first network device to the second network device.

Notably, in the case of K = 0, the solution is for addressing the in-order packet routing. For addressing a scenario that data packets are not routed in order, the parameter K is a positive integer. For instance, if K = 3, only when X < L-3, the first network device can determine that packet X is missing.

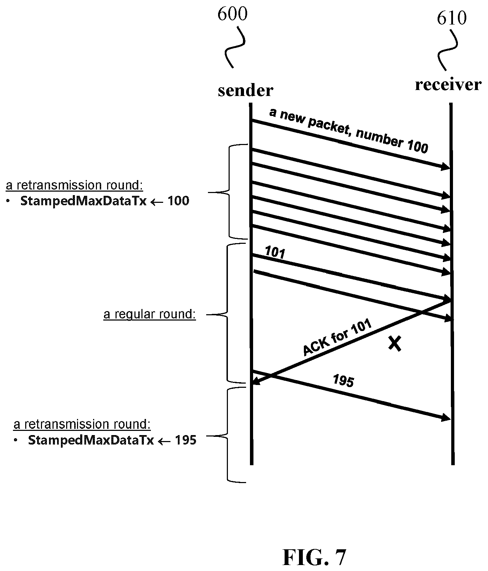

The protocol at the sender side, i.e., the first network device 600, may divide the timeline into rounds. Each round is either a "regular round" where new packets are transmitted, or a "retransmission round" where lost packets are retransmitted. This is demonstrated by FIG. 7. A variable StampedMaxDataTx is defined. This variable may be used for remembering the last regular (not retransmitted) transmitted packet before entering a retransmission round.

FIG. 7 shows an example of the proposed protocol, according to an embodiment of the disclosure. It should be note that in this specific embodiment, it is assumed that K = 0. In particular, in last regular round, a new packet 100 is transmitted by a sender to a receiver. The sender may be the first network device 600 as shown in FIG. 6, and the receiver may be the second network device 610 as shown in FIG. 6. In a retransmission round, only lost packets are transmitted. Further, the variable StampedMaxDataTx is set to 100, since the packet 100 is the last regular (not retransmitted) transmitted packet. After retransmitting lost packets, a regular round starts, in which new packets are transmitted. New losses will be fast-retransmitted. That is, when the first network device 600 knows that a packet is reported as missing packet for the first time, the first network device 600 will retransmit that packet immediately. In this case, when receiving a NACK for packet 101, or not receiving an ACK for 101, or receiving a notification message notifying that packet 101 is lost, the first network device 600 enters a "retransmission round". Following the fast retransmission, StampedMaxDataTx will be updated. As shown in this example, at next retransmission round, only lost packets are transmitted, and the variable StampedMaxDataTx is set to 195.

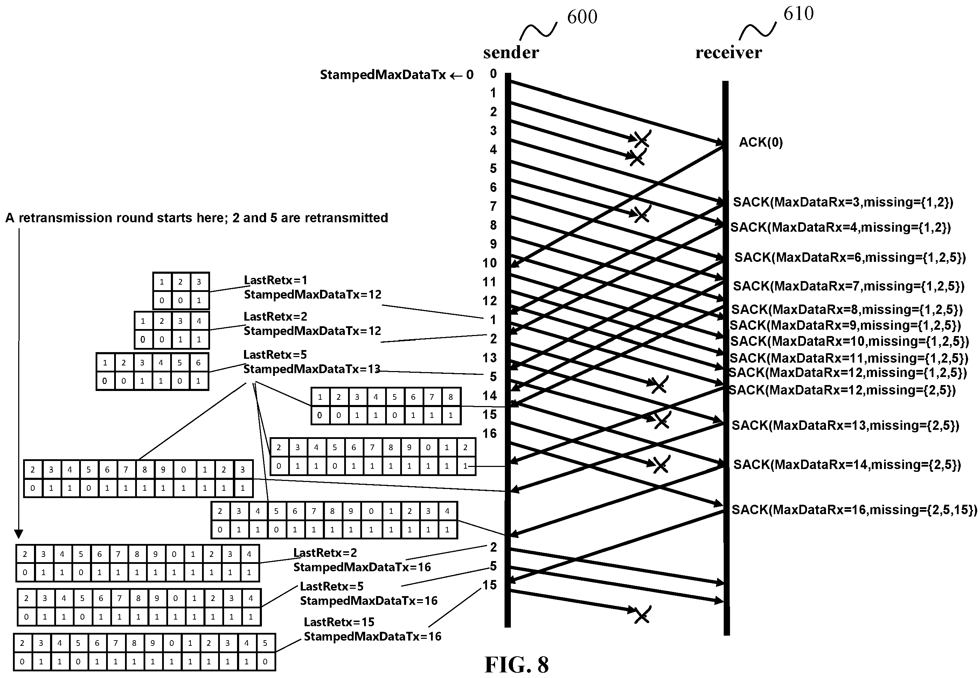

FIG. 8 shows a LERP execution example according to an embodiment of the disclosure. It is assumed that K = 0 in this embodiment. The sender shown in FIG. 8 may be the first network device 600 as shown in FIG. 6, and the receiver may be the second network device 610 as shown in FIG. 6.

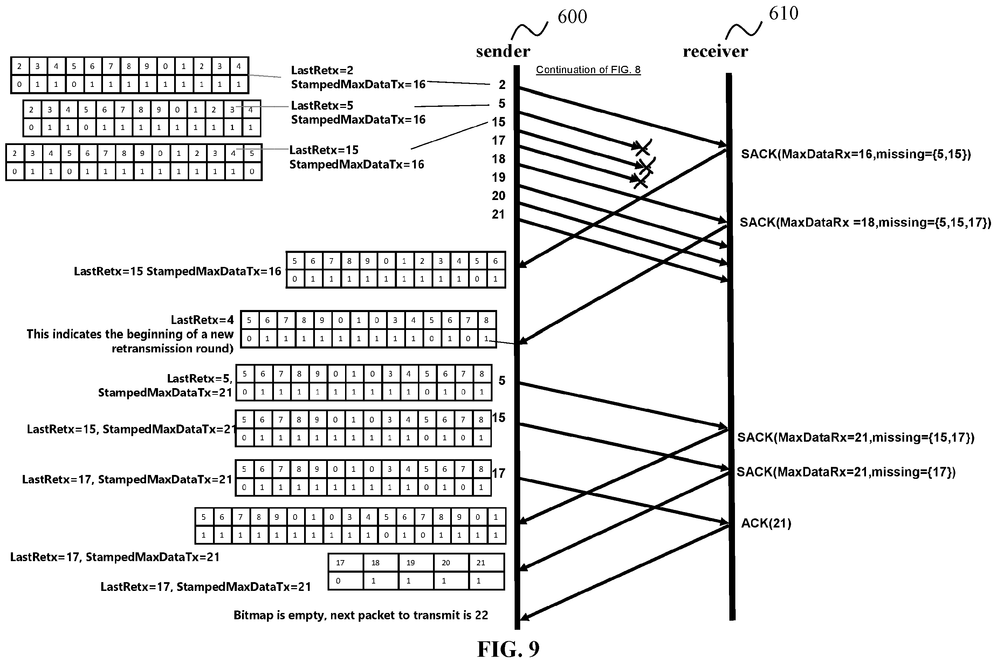

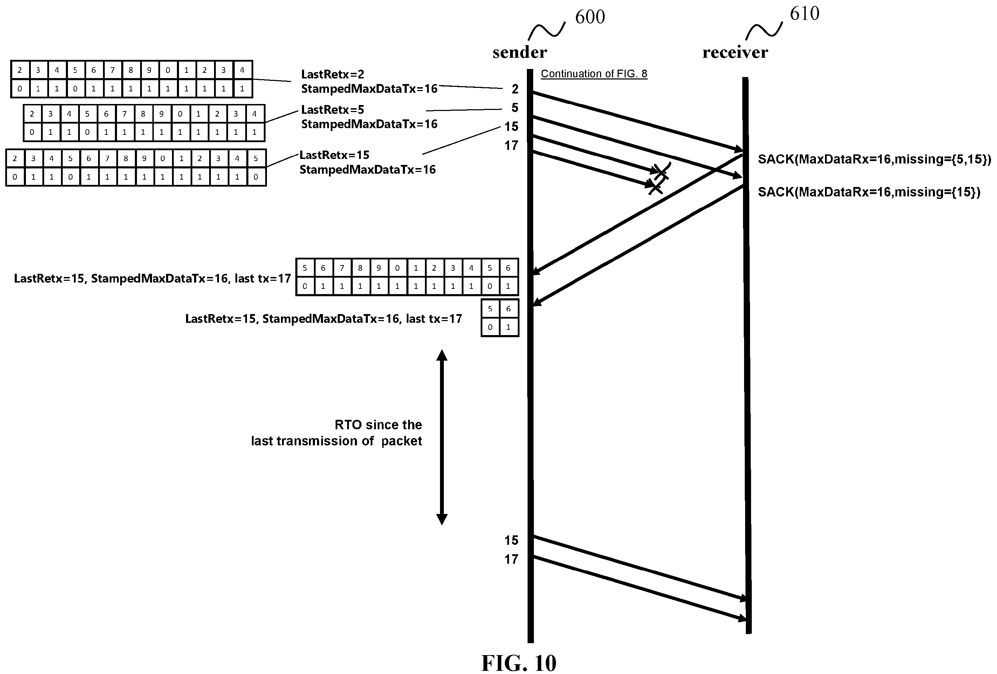

In this example, packet(0) is correctly received and an ACK(0) is sent back by the receiver. Then, packet(1) and packet(2) are lost. When packet(3) is received, the receiver understands that packet(1) and packet(2) were lost. It may send a notification message saying that all the packets have been correctly received till packet number 3, but without packet(1) and packet(2). It is worth mentioning that a "SACK" is used in this figure (and FIG. 9, FIG. 10) merely as an example to represent a notification message. The receiver, i.e., the second network device 610, may send other notification messages such as ACKs or NACKs as well.

This SACK is the first SACK sent by the receiver. When the sender receives this SACK, it may build a retransmission dataset (a bitmap in this example), which indicates what packets are missing. It also starts the first retransmission round: StampedMaxDataTx is set to 12 (the last packet sent in order) and another variable LastRetx indicates which missing packet is the next to be retransmitted. In this case, packet(1) and packet(2) are retransmitted. Then, the first retransmission round ends, and the sender continues transmitting regular packets.

Only regular packet(13) is transmitted when a SACK reporting the loss of packet(5) is received. The sender enters a new retransmission round, but in this round not all the lost packets are retransmitted, because the sender does not know if the retransmission of packet(1) and packet(2) was successful. The sender sets StampedMaxDataTx to 13 and retransmit packet(5). Then the sender exits the retransmission round and continues transmitting regular packets, the first of which is packet(14). When the SACK for this packet is received, it tells the sender that packet(14) is OK, and that packet(2) and packet(5) are still missing. Since StampedMaxDataTx=13 and 14>13, the sender knows that by this all the retransmissions should have been received. Since packet(2) and packet(5) are still reported missing, this means that a new retransmission round can start and these packets should be retransmitted for the second time (i.e., transmitted in the third round). The sender sets StampedMaxDataTx=16 and retransmit packet(2) and packet(5). The sender then wants to switch to transmitting regular packets, but it is reported for the first time that packet(15) is missing. It thus stays in the retransmission round and retransmits packet(15).

FIG. 9 continues the above example shown in FIG. 8. The first three shown packets (i.e., packet(2), packet(5), and packet(15)) are the last ones from FIG. 8. In this example, after packet(21) is sent, there are no more new packets to send. The SACK for packet 18 is received, and this SACK says that packet(18) have been correctly received. Since StampedMaxDataTx=16 and 18>16, the sender enters a new retransmission round. The sender is also notified, for the first time, about a loss of packet(17). The sender enters a new retransmission round, and retransmits packet(5), then packet(15) and finally packet(17). All these packets are successfully received, the receiver responds with an ACK(21) and the protocol can stop.

FIG. 10 shows a different way to continue the example from FIG. 8. The first three shown packets (i.e., packet(2), packet(5), and packet(15)) are the last ones from FIG. 8. Here it is assumed that packet(17) is the last to be sent. That is, in this example, after packet(17) is sent, there are no more new packets to send. This creates a problem for the sender, because it is not informed that a packet whose sequence number is greater than StampedMaxDataTx=16 has been accepted. A way for the sender to decide that a new retransmission round should be started is using a time-out. Whenever it transmits a packet, old or new, the sender restarts the timer. This timer expires after a retransmission time out (RTO). The RTO is set to a value greater than RTT. There are many algorithms for estimating RTT, it is not limited here in this disclosure. When the timer expires, the sender retransmits all the packets for which an ACK has not been received so far, namely, packet(16) and packet(17).

Optionally, the setting of the RTO can be prevented by sending an empty packet, with a new sequence number after retransmissions, if no new data exist.

It should be noted that the sender and the receiver shown in one of the FIG. 7 to FIG. 10 may be the first network device 600 and the second network device 610 as shown in FIG. 6, respectively.

To simplify the description, it may be assumed that the sender has a bitmap that indicates the status of every outstanding packet (i.e., every transmitted packet that was not confirmed by the receiver). In practice, when the sender is in NORMAL state, i.e., "a regular round" where new packets are transmitted, there is no need to hold a bitmap until the receiver reports about a new detected gap. Notably, a gap occurs when the packets are not contiguous, i.e., when there is a missing packet.

According to an embodiment of the disclosure, the first network device 600 may be configured to maintain a first data structure that is indicative of the missing data packets that are indicated by the at least one notification message 602. Accordingly, the first network device 600 may be further configured to update the first data structure in response to the at least one notification message 602.

Further, the first network device 600 may be configured to maintain a second data structure that is indicative of to-be-retransmitted data packets; and remove a to-be-retransmitted data packet from the second data structure after retransmitting the to-be-retransmitted data packet.

Optionally, the first network device 600 may be further configured to add the one or more data packets into the second data structure, if the one or more data packets are indicated as missing data packets after its first transmission by the at least one notification message 602, and the sequence number X of the each missing data packet 603 is less than L - K.

Possibly, the first network device 600 may be further configured to add the one or more data packets into the second data structure, if the following conditions are fulfilled:
- the one or more data packets 603 have been retransmitted,
- a further notification message is received by the first network device 600, wherein the further notification message is indicative of the one or more data packets 603 still being missing at the second network device 610,
- the further notification message is also indicative of a further data packet that has been received at the second network device 610, wherein the further data packet was sent for the first time after the last retransmission of the one or more data packets 603, and
- the further data packet indicated by the further notification message has a sequence number that is not less than Y + K, wherein Y is a sequence number of a first data packet that is sent for the first time after the last retransmission of the one or more data packets 603.

According to embodiments of this disclosure, at the sender side, the first network device 600 transmits data packets and receive ACK/NACK and/or SACK messages. The first network device 600 has two states: NORMAL and RECOVERY. NORMAL state is when the bitmap does not have any indication for lost packets. RECOVERY state is when reassembly bitmap has at least one reported lost packet.

In particular, the first network device 600 may be configured with five variables: State, Maximum In-Order Received (MaxIORx), Last Retransmitted (LastRetx), Stamped Maximum Data Tx (StampedMaxDataTx) and the parameter K. MaxIORx holds the largest PSN of the confirmed packets received in-order by the receiver, i.e., the second network device 610. This is the PSN of the packet right before the earliest reported lost one. LastRetx holds the PSN of the last retransmitted packet. StampedMaxDataTx holds the largest PSN of transmitted packets when a retransmit is performed. Notably, LastRetx and StampedMaxDataTx are updated at the same time, when the first network device 600 retransmits a packet.

In a particular embodiment, the first network device 600 transmits packets with PSN = 498/499/500, then retransmits a packet with PSN=20, and then transmits packets with PSN = 501/502. In this case, LastRetx = 20, and StampedMaxDataTx = 500.

At the sender side, an algorithm according to embodiments of this disclosure is as following:
1. When RTO expires:
   a. Set LastRetx ← MaxIORx
   b. Set state ← RECOVERY
2. When a packet can be transmitted:
   a. If state = NORMAL, then transmit next in-order packet.
   b. Else (that is, state is RECOVERY), if there is a lost packet with PSN > LastRetx, then:
      i. Retransmit this packet.
      ii. Update LastRetx to the PSN of the retransmitted packet.
      iii. If needed, update StampedMaxDataTx to the PSN of currently largest PSN that was transmitted.
   c. Else (that is, state is RECOVERY but all known lost packets have been retransmitted in the last retransmission round, so there is no lost packet with PSN>LastRetx), transmit next in-order packet (as done in NORMAL state).
3. When an ACK is received (this happens when the receiver has no gap in the sequence numbers), which indicates that all the packets up to ACK.PSN have been received.
   a. Set state ← NORMAL (an ACK indicates that there is no missing packet)
   b. Update bitmap
   c. Update MaxIORx
4. When a SACK is received (SACK may contain ACKs and NACKs):
   a. state ← RECOVERY.
   b. Update bitmap. If the SACK reports about missing packets that are currently not in the sender's bitmap, add to the bitmap only packets whose PSN fulfils: PSN≤ SACK.MaxDataRx
   c. If (StampedMaxDataTx) < SACK.MaxDataRx, then reset LastRetx = MaxIORx.

According to embodiments of this disclosure, at the receiver side, the second network device 610 receives data packets and transmits ACK/NACK and/or SACK messages. The first network device 600 may be configured with two variables: ExpectedPSN, and MaxDataRx. In particular, ExpectedPSN holds the PSN of the next In-Order packet. It is also the minimum (first) PSN out of all lost packets. MaxDataRx: holds the largest PSN ever received by the receiver.

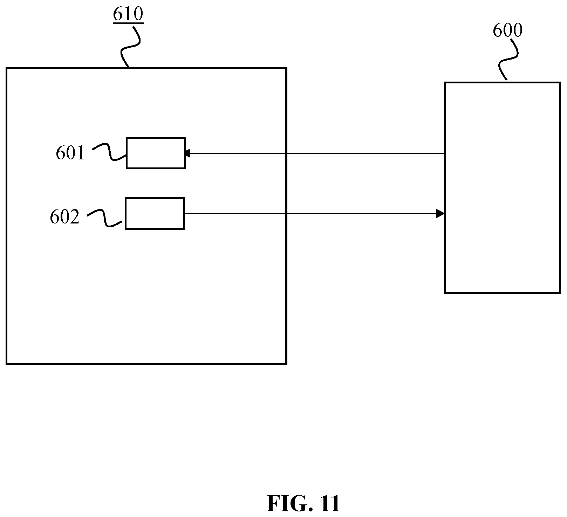

FIG. 11 shows a second network device 610 according to an embodiment of the disclosure. The second network device 610 may comprise processing circuitry (not shown) configured to perform, conduct or initiate the various operations of the second network device 610 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The second network device 610 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the second network device 610 to be performed. In one embodiment, the processing circuitry comprises one or more processors and a non-transitory memory connected to the one or more processors. The non-transitory memory may carry executable program code which, when executed by the one or more processors, causes the second network device 610 to perform, conduct or initiate the operations or methods described herein.

In particular, the second network device 610 is configured to receive a sequence of data packets 601 from a first network device 600. Then, the second network device 610 is further configured to transmit at least one notification message 602, to the first network device 600, wherein the at least one notification message 602 is indicative of the largest sequence number L of a data packet among sequence numbers of data packets that have been received at the second network device 610 and one or more data packets 603 of the sequence of data packets that are missing at the second network device 610 up to the largest sequence number L.

In a particular embodiment, upon receiving a new packet whose number is PSN, which was never received, the second network device 610 may update a bitmap at the receiver sider. In particular, if PSN > MaxDataRx, the second network device 610 may set MaxDataRx with the value of PSN. If PSN = ExpectedPSN, the second network device 610 may update ExpectedPSN. If MaxDataRx > ExpectedPSN - 1 (there is a missing packet), the second network device 610 may send a SACK, otherwise it may send an ACK.

It is worth mentioning that to save bandwidth, it is possible for the second network device 610 not to send an ACK or a SACK for every received packet. For example, the receiver can maintain a counter and send an ACK or a SACK after receiving N packets, where N≥1. In such a case, the receiver should also have a timer, which triggers the transmission of an ACK/SACK if N packets are not received within a time-out period.

Optionally, the second network device 610 may be further configured to transmit the at least one notification message 602 to the first network device 600, when a timer expires.

Notably, traffic is bidirectional, and thus each endpoint is both a sender and a receiver. Possibly, the first network device 600 shown in FIG. 6 may be the second network device 610 shown in FIG. 11 in a specific implementation.

Further, it should be noted that the algorithm as described in the previous embodiments makes a hidden assumption that packets are routed in order. For example, as shown in FIG. 8, when packet(4) is received after packet(1), the receiver assumes that packet(2) and packet(3) are lost. This is because that if these packets are not lost, they should have been received before packet(4). But if packets are not necessarily routed over the same path, it is possible that packet(2) and/or packet(3) will be received after packet(4).

Another example is when the sender receives an ACK for packet number StampedMaxDataTx, and assumes that all retransmitted packets should have been received before this packet. This assumption holds only if the network guarantees in-order packet routing.

However, in some cases, the network does not necessarily ensure in-order packet routing. The LERP as proposed in this disclosure can also apply for such cases. For a modified version of LERP, the sender maintains a variable K, which indicates an out-of-order distance, i.e., how many packets can bypass a certain packet when they are all sent from the sender to the receiver.

For instance, there are two packet: packet(i) and packet(j), where i > j. That is, the sender sends packet(j) before packet(i), however, the receiver receives packet(i) before packet(j). It is defined that the out-of-order distance as i - j. For example, if packet(6) is received before packet(4), then the out-of-order distance is 2. This means that a packet has bypassed two previously sent packets.

It should be noted that, it is assumed that data packets can be received out-of-order, but there is a maximum distance between every two out-of-order received packets. The value of the maximum distance is the variable K, where K ≥ 0. K = 0 is the special case where packets are always received in order. In a case that a receiver receives packet(2) and then packet(6), if K = 2, it is possible for packet(6) to be received before packet(4) and packet(5), but not before packet(3). Therefore, the receiver can determine that packet(3) has been lost. However, if K = 3, when receiving packet(6), the receiver cannot decide yet whether packet(3) or packet(4) or packet(5) is lost.

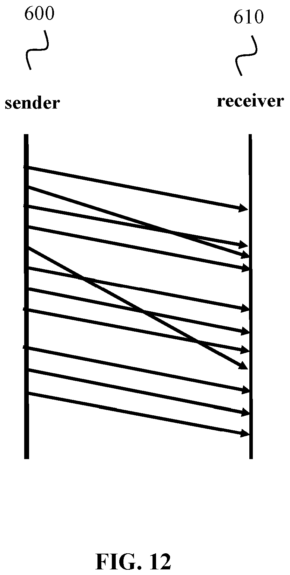

In all the examples discussed in FIG. 8 to FIG. 10, the variable K was equal to 0. But as shown in FIG. 12, we see that the second packet is received after the third one (K = 1) and that the 5th packet is received after the 8th one (K = 3). Thus, in this example K = 3 holds.

With respect to the above discussed embodiments shown in FIG. 8 to FIG. 10, in order to address the out-of-order cases where K > 0, two changes may be needed in the sender's algorithm, and no change is required in the receiver's algorithm. Changes may be done in step 4 of the sender's algorithm, which may be modified as follows:
4. When a SACK is received (SACK reports about missing packets):
d. state ← RECOVERY.
e. Update bitmap. If the SACK reports about missing packets that are currently not in the sender's bitmap, add to the bitmap only packets whose PSN fulfils: (PSN≤ SACK.MaxDataRx - K)
f. If (StampedMaxDataTx + K) < SACK.MaxDataRx, then reset LastRetx = MaxIORx.

Optionally, the parameter K may be negotiated during a connection setup. For instance, K may be negotiated during the connection setup between the first network device 600 and the second network device 610. Alternatively, the parameter K may also be negotiated during a connection setup between the first network device 600 / the second network device 610 and another network device such as a network controller. The parameter K may be a static parameter, or a dynamic parameter. Notably, the parameter K may be a fixed number. Alternatively, the parameter K may be a dynamically updated number, which may be notified to both of the sender and receiver upon change.

The algorithm as previously described in embodiments of this disclosure uses both ACK and SACK messages. But it can also be implemented without using ACKs, because SACK is a generalization of ACK. The algorithm decouples between transmission control and flow control. For simplicity, it assumes that a receiver's bitmap is maintained to cover all outstanding packets. However, the algorithm can be extended to also implement a flow control mechanism in order to ensure that the sender does not send packets for which bitmap resources (or other resources) are not available at the receiver. The algorithm decouples between congestion control and flow control. Thus, it can be implemented together with almost every congestion control algorithm. In particular, congestion control information can be carried in the SACK and ACK messages. The algorithm relies on an RTO mechanism. An RTO mechanism may include estimating the RTT. Information for RTT estimation can be integrated into the data packets, SACKs and ACKs.

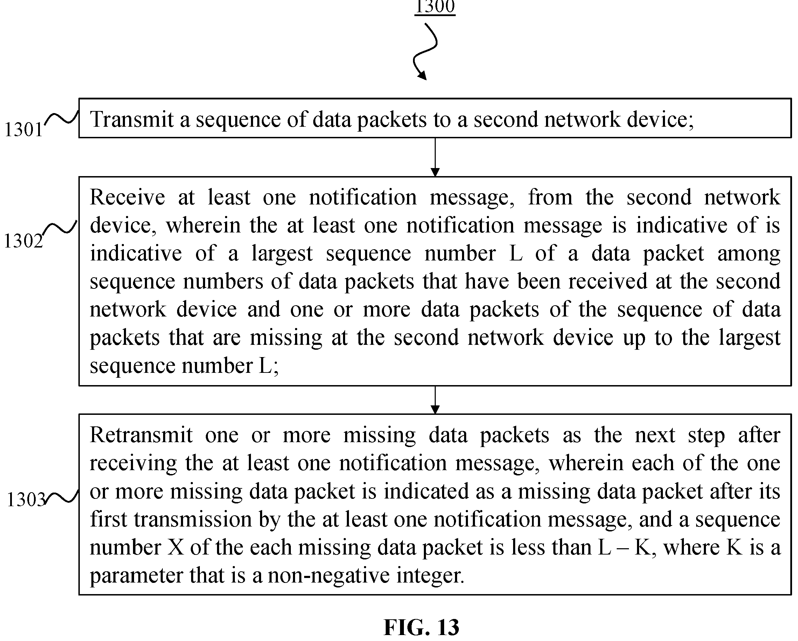

FIG. 13 shows a method 1300 according to an embodiment of the disclosure. In a particular embodiment of the disclosure, the method 1300 is performed by a first network device 600 shown in FIG. 6. The method 1300 comprises: a step 1301 of transmitting a sequence of data packets 601 to a second network device 610; a step 1302 of receiving at least one notification message 602, from the second network device 610, wherein the at least one notification message 602 is indicative of a largest sequence number L of a data packet among sequence numbers of data packets that have been received at the second network device 610 and one or more data packets 603 of the sequence of data packets that are missing at the second network device 610 up to the largest sequence number L; and a step 1303 of retransmitting the missing one or more data packets 603 as the next step after receiving the at least one notification message 602, wherein each of the one or more missing data packet 603 is indicated as a missing data packet after its first transmission by the at least one notification message 602, and a sequence number X of the each missing data packet 603 is less than L - K, where K is a parameter that is a non-negative integer. Possibly, the second network device 610 is the second network device shown in FIG. 6 or FIG. 11.

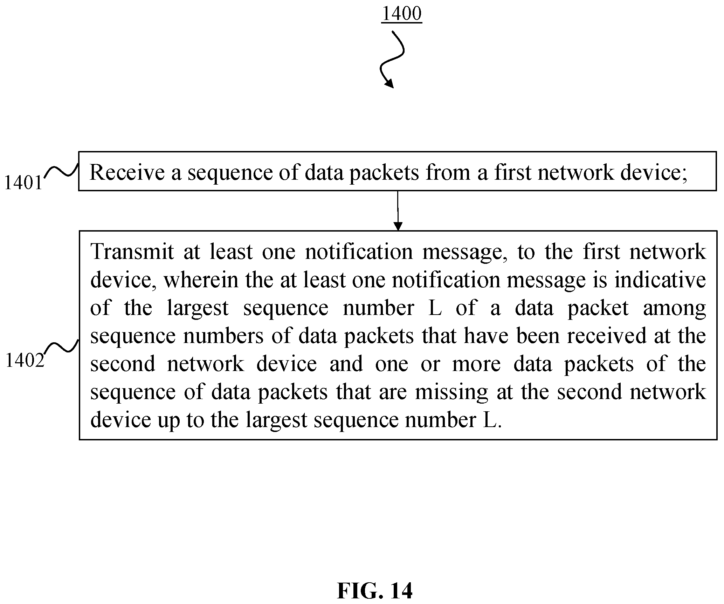

FIG. 14 shows a method 1400 according to an embodiment of the disclosure. In a particular embodiment of the disclosure, the method 1400 is performed by a second network device 610 shown in FIG. 11. The method 1400 comprises: a step 1401 of receiving a sequence of data packets 601 from a first network device 600; and a step 1402 of transmitting at least one notification message 602 to the first network device 600, wherein the at least one notification message 602 is indicative of the largest sequence number L of a data packet among sequence numbers of data packets that have been received at the second network device 610 and one or more data packets 603 of the sequence of data packets that are missing at the second network device 610 up to the largest sequence number L. Possibly, the first network device 600 is the first network device shown in FIG. 6 or FIG. 11.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the first network device 600 and the second network device 610, respectively, comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the first network device 600 and the second network device 610, respectively, may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

## Claims

1. A first network device (600), configured to:
transmit a sequence of data packets (601) to a second network device (610);
receive at least one notification message (602), from the second network device (610), wherein the at least one notification message (602) is indicative of a largest sequence number L of a data packet among sequence numbers of data packets that have been received at the second network device (610) and one or more data packets (603) of the sequence of data packets that are missing at the second network device (610) up to the largest sequence number L; and
retransmit one or more missing data packets (603) as the next step after receiving the at least one notification message (602), wherein each of the one or more missing data packet (603) is indicated as a missing data packet after its first transmission by the at least one notification message (602), and a sequence number X of the each missing data packet (603) is less than L - K, where K is a parameter that is a non-negative integer;
wherein the first network device (600) is further configured to:
maintain a first data structure that is indicative of the missing data packets that are indicated by the at least one notification message (602);
update the first data structure in response to the at least one notification message (602);
maintain a second data structure that is indicative of to-be-retransmitted data packets;
add the one or more data packets (603) into the second data structure, when the one or more data packets are indicated as missing data packets after its first transmission by the at least one notification message (602), and the sequence number X of the each missing data packet (603) is less than L - K; and
remove a to-be-retransmitted data packet from the second data structure after retransmitting the to-be-retransmitted data packet;
wherein the first network device (600) is further configured to operate in a first state and in a second state,
wherein in the first state, the first network device (600) is configured to:
transmit new data packets;
enter the second state, when the second data structure is not empty; and
stay in the first state, when the second data structure is empty;
wherein in the second state, the first network device (600) is configured to retransmit the missing data packets according to the second data structure.

2. The first network device (600) according to claim 1, configured to:
add the one or more data packets (603) again into the second data structure, if the following conditions are fulfilled:
- the one or more data packets (603) have been retransmitted,
- a further notification message is received by the first network device (600), wherein the further notification message is indicative of the one or more data packets (603) still being missing at the second network device (610),
- the further notification message is also indicative of a further data packet that has been received at the second network device (610), wherein the further data packet was sent for the first time after the last retransmission of the one or more data packets (603), and
- the further data packet indicated by the further notification message has a sequence number that is not less than Y + K, wherein Y is a sequence number of a first data packet that is sent for the first time after the last retransmission of the one or more data packets (603).

3. The first network device (600) according to one of the claims 1 to 2, wherein in the second state, the first network device (600) is configured to:
enter the first state if the second data structure is empty, and/or
stay in the second state, if the second data structure is not empty.

4. The first network device (600) according to one of the claims 1 to 3, further configured to:
use a timer, and set the timer when transmitting a new data packet and/or when retransmitting a missing data packet; and
add all data packets for which an acknowledgment was not received to the second data structure, when the timer expires.

5. The first network device (600) according to claim 4, further configured to:
set the timer with a value greater than a round trip time.

6. A method (1300) performed by a first network device (600), the method (1300) comprising:
transmitting (1301) a sequence of data packets (601) to a second network device (610);
receiving (1302) at least one notification message (602), from the second network device (610), wherein the at least one notification message (602) is indicative of a largest sequence number L of a data packet among sequence numbers of data packets that have been received at the second network device (610) and one or more data packets (603) of the sequence of data packets that are missing at the second network device (610) up to the largest sequence number L; and
retransmitting (1303) one or more missing data packets (603) as the next step after receiving the at least one notification message (602), wherein each of the one or more missing data packet (603) is indicated as a missing data packet after its first transmission by the at least one notification message (602), and a sequence number X of the each missing data packet (603) is less than L - K, where K is a parameter that is a non-negative integer;
maintaining a first data structure that is indicative of the missing data packets that are indicated by the at least one notification message (602);
updating the first data structure in response to the at least one notification message (602);
maintaining a second data structure that is indicative of to-be-retransmitted data packets;
adding the one or more data packets (603) into the second data structure, when the one or more data packets are indicated as missing data packets after its first transmission by the at least one notification message (602), and the sequence number X of the each missing data packet (603) is less than L - K; and
removing a to-be-retransmitted data packet from the second data structure after retransmitting the to-be-retransmitted data packet;
wherein the method further comprises:
operating in a first state and in a second state,
wherein in the first state, the method further comprises:
transmitting new data packets;
entering the second state, when the second data structure is not empty; and
staying in the first state, when the second data structure is empty;
wherein in the second state, the method further comprises: retransmitting the missing data packets according to the second data structure.

7. A computer program comprising a program code for performing, when running on a computer, the method (1300) according to claim 6.

## Patentansprüche

1. Erste Netzvorrichtung (600), die zu Folgendem ausgelegt ist:
Übertragen einer Sequenz von Datenpaketen (601) an eine zweite Netzvorrichtung (610);
Empfangen mindestens einer Benachrichtigungsnachricht (602) von der zweiten Netzvorrichtung (610), wobei die mindestens eine Benachrichtigungsnachricht (602) eine größte Sequenznummer L eines Datenpakets unter Sequenznummern von Datenpaketen, die an der zweiten Netzvorrichtung (610) empfangen wurden, und einem oder mehreren Datenpaketen (603) der Sequenz von Datenpaketen, die an der zweiten Netzvorrichtung (610) fehlen, bis zu der größten Sequenznummer L angibt; und
erneutes Übertragen eines oder mehrerer fehlender Datenpakete (603) als den nächsten Schritt nach dem Empfangen der mindestens einen Benachrichtigungsnachricht (602), wobei jedes des einen oder der mehreren fehlenden Datenpakete (603) nach seiner ersten Übertragung durch die mindestens eine Benachrichtigungsnachricht (602) als ein fehlendes Datenpaket angegeben wird und eine Sequenznummer X des jeden fehlenden Datenpakets (603) kleiner als L - K ist, wobei K ein Parameter ist, der eine nicht-negative ganze Zahl ist;
wobei die erste Netzvorrichtung (600) ferner zu Folgendem ausgelegt ist:
Beibehalten einer ersten Datenstruktur, die die fehlenden Datenpakete angibt, die durch die mindestens eine Benachrichtigungsnachricht (602) angegeben werden;
Aktualisieren der ersten Datenstruktur als Reaktion auf die mindestens eine Benachrichtigungsnachricht (602);
Beibehalten einer zweiten Datenstruktur, die erneut zu übertragende Datenpakete angibt;
Hinzufügen des einen oder der mehreren Datenpakete (603) in die zweite Datenstruktur, wenn das eine oder die mehreren Datenpakete nach ihrer ersten Übertragung durch die mindestens eine Benachrichtigungsnachricht (602) als fehlende Datenpakete angegeben werden und die Sequenznummer X des jeden fehlenden Datenpakets (603) kleiner als L - K ist; und
Entfernen eines erneut zu übertragenden Datenpakets aus der zweiten Datenstruktur nach dem erneuten Übertragen des erneut zu übertragenden Datenpakets;
wobei die erste Netzvorrichtung (600) ferner dazu ausgelegt ist, in einem ersten Zustand und in einem zweiten Zustand zu arbeiten,
wobei die erste Netzvorrichtung (600) in dem ersten Zustand zu Folgendem ausgelegt ist:
Übertragen neuer Datenpakete;
Eintreten in den zweiten Zustand, wenn die zweite Datenstruktur nicht leer ist; und
Verbleiben in dem ersten Zustand, wenn die zweite Datenstruktur leer ist;
wobei die erste Netzvorrichtung (600) in dem zweiten Zustand dazu ausgelegt ist, die fehlenden Datenpakete gemäß der zweiten Datenstruktur erneut zu übertragen.

2. Erste Netzvorrichtung (600) nach Anspruch 1, die zu Folgendem ausgelegt ist:
erneutes Hinzufügen des einen oder der mehreren Datenpakete (603) in die zweite Datenstruktur, wenn die folgenden Bedingungen erfüllt sind:
- das eine oder die mehreren Datenpakete (603) wurden erneut übertragen;
- eine weitere Benachrichtigungsnachricht wird durch die erste Netzvorrichtung (600) empfangen, wobei die weitere Benachrichtigungsnachricht das eine oder die mehreren Datenpakete (603) angibt, die weiterhin an der zweiten Netzvorrichtung (610) fehlen,
- die weitere Benachrichtigungsnachricht gibt auch ein weiteres Datenpaket an, das an der zweiten Netzvorrichtung (610) empfangen wurde, wobei das weitere Datenpaket erstmals nach der letzten erneuten Übertragung des einen oder der mehreren Datenpakete (603) gesendet wurde, und
- das durch die weitere Benachrichtigungsnachricht angegebene weitere Datenpaket weist eine Sequenznummer auf, die nicht kleiner als Y + K ist, wobei Y eine Sequenznummer eines ersten Datenpakets ist, das erstmals nach der letzten erneuten Übertragung des einen oder der mehreren Datenpakete (603) gesendet wird.

3. Erste Netzvorrichtung (600) nach einem der Ansprüche 1 bis 2, wobei die erste Netzvorrichtung (600) in dem zweiten Zustand zu Folgendem ausgelegt ist:
Eintreten in den ersten Zustand, wenn die zweite Datenstruktur leer ist, und/oder
Verbleiben in dem zweiten Zustand, wenn die zweite Datenstruktur nicht leer ist.

4. Erste Netzvorrichtung (600) nach einem der Ansprüche 1 bis 3, die ferner zu Folgendem ausgelegt ist:
Verwenden eines Timers und Einstellen des Timers beim Übertragen eines neuen Datenpakets und/oder beim erneuten Übertragen eines fehlenden Datenpakets; und
Hinzufügen aller Datenpakete, für die keine Bestätigung empfangen wurde, zu der zweiten Datenstruktur nach Ablauf des Timers.

5. Erste Netzvorrichtung (600) nach Anspruch 4, die ferner zu Folgendem ausgelegt ist:
Einstellen des Timers mit einem Wert größer als eine Umlaufzeit.

6. Verfahren (1300), das durch eine erste Netzvorrichtung (600) durchgeführt wird, wobei das Verfahren (1300) Folgendes umfasst:
Übertragen (1301) einer Sequenz von Datenpaketen (601) an eine zweite Netzvorrichtung (610);
Empfangen (1302) mindestens einer Benachrichtigungsnachricht (602) von der zweiten Netzvorrichtung (610), wobei die mindestens eine Benachrichtigungsnachricht (602) eine größte Sequenznummer L eines Datenpakets unter Sequenznummern von Datenpaketen, die an der zweiten Netzvorrichtung (610) empfangen wurden, und einem oder mehreren Datenpaketen (603) der Sequenz von Datenpaketen, die an der zweiten Netzvorrichtung (610) fehlen, bis zu der größten Sequenznummer L angibt; und
erneutes Übertragen (1303) eines oder mehrerer fehlender Datenpakete (603) als den nächsten Schritt nach dem Empfangen der mindestens einen Benachrichtigungsnachricht (602), wobei jedes des einen oder der mehreren fehlenden Datenpakete (603) nach seiner ersten Übertragung durch die mindestens eine Benachrichtigungsnachricht (602) als ein fehlendes Datenpaket angegeben wird und eine Sequenznummer X des jeden fehlenden Datenpakets (603) kleiner als L - K ist, wobei K ein Parameter ist, der eine nicht-negative ganze Zahl ist;
Beibehalten einer ersten Datenstruktur, die die fehlenden Datenpakete angibt, die durch die mindestens eine Benachrichtigungsnachricht (602) angegeben werden;
Aktualisieren der ersten Datenstruktur als Reaktion auf die mindestens eine Benachrichtigungsnachricht (602);
Beibehalten einer zweiten Datenstruktur, die erneut zu übertragende Datenpakete angibt;
Hinzufügen des einen oder der mehreren Datenpakete (603) in die zweite Datenstruktur, wenn das eine oder die mehreren Datenpakete nach ihrer ersten Übertragung durch die mindestens eine Benachrichtigungsnachricht (602) als fehlende Datenpakete angegeben werden und die Sequenznummer X jedes fehlenden Datenpakets (603) kleiner als L - K ist; und
Entfernen eines erneut zu übertragenden Datenpakets aus der zweiten Datenstruktur nach dem erneuten Übertragen des erneut zu übertragenden Datenpakets;
wobei das Verfahren ferner Folgendes umfasst:
Arbeiten in einem ersten Zustand und in einem zweiten Zustand,
wobei das Verfahren in dem ersten Zustand ferner Folgendes umfasst:
Übertragen neuer Datenpakete;
Eintreten in den zweiten Zustand, wenn die zweite Datenstruktur nicht leer ist; und
Verbleiben in dem ersten Zustand, wenn die zweite Datenstruktur leer ist;
wobei das Verfahren in dem zweiten Zustand ferner Folgendes umfasst: erneutes Übertragen der fehlenden Datenpakete gemäß der zweiten Datenstruktur.

7. Computerprogramm, das einen Programmcode zum Durchführen, wenn es auf einem Computer ausgeführt wird, des Verfahrens (1300) nach Anspruch 6 umfasst.

## Revendications

1. Premier dispositif de réseau (600), configuré pour :
transmettre une séquence de paquets de données (601) à un second dispositif de réseau (610) ;
recevoir au moins un message de notification (602), en provenance du second dispositif de réseau (610), dans lequel l'au moins un message de notification (602) indique un numéro de séquence L le plus grand d'un paquet de données parmi des numéros de séquence de paquets de données qui ont été reçus au niveau du second dispositif de réseau (610) et un ou plusieurs paquets de données (603) de la séquence de paquets de données qui sont manquants au niveau du second dispositif de réseau (610) jusqu'au numéro de séquence L le plus grand ; et
retransmettre un ou plusieurs paquets de données manquants (603) comme étape suivante après la réception de l'au moins un message de notification (602), dans lequel chacun des un ou plusieurs paquets de données manquants (603) est indiqué comme paquet de données manquant après sa première transmission par l'au moins un message de notification (602), et un numéro de séquence X de chaque paquet de données manquant (603) est inférieur à L - K, où K est un paramètre qui est un entier non négatif ;
dans lequel le premier dispositif de réseau (600) est en outre configuré pour :
maintenir une première structure de données qui indique les paquets de données manquants qui sont indiqués par l'au moins un message de notification (602) ;
mettre à jour la première structure de données en réponse à l'au moins un message de notification (602) ;
maintenir une seconde structure de données qui indique des paquets de données à retransmettre ;
ajouter les un ou plusieurs paquets de données (603) dans la seconde structure de données, lorsque les un ou plusieurs paquets de données sont indiqués comme paquets de données manquants après leur première transmission par l'au moins un message de notification (602), et que le numéro de séquence X de chaque paquet de données manquant (603) est inférieur à L - K ; et
supprimer un paquet de données à retransmettre de la seconde structure de données après la retransmission du paquet de données à retransmettre ;
dans lequel le premier dispositif de réseau (600) est en outre configuré pour fonctionner dans un premier état et dans un second état,
dans lequel dans le premier état, le premier dispositif de réseau (600) est configuré pour :
transmettre de nouveaux paquets de données ;
entrer dans le second état, lorsque la seconde structure de données n'est pas vide ; et
rester dans le premier état, lorsque la seconde structure de données est vide ;
dans lequel dans le second état, le premier dispositif de réseau (600) est configuré pour retransmettre les paquets de données manquants selon la seconde structure de données.

2. Premier dispositif de réseau (600) selon la revendication 1, configuré pour :
ajouter les un ou plusieurs paquets de données (603) à nouveau dans la seconde structure de données, si les conditions suivantes sont remplies :
- les un ou plusieurs paquets de données (603) ont été retransmis,
- un autre message de notification est reçu par le premier dispositif de réseau (600), dans lequel l'autre message de notification indique les un ou plusieurs paquets de données (603) étant toujours manquants au niveau du second dispositif de réseau (610),
- l'autre message de notification indique également un autre paquet de données qui a été reçu au niveau du second dispositif de réseau (610), dans lequel l'autre paquet de données a été envoyé pour la première fois après la dernière retransmission des un ou plusieurs paquets de données (603), et
- l'autre paquet de données indiqué par l'autre message de notification a un numéro de séquence qui n'est pas inférieur à Y + K, dans lequel Y est un numéro de séquence d'un premier paquet de données qui est envoyé pour la première fois après la dernière retransmission des un ou plusieurs paquets de données (603).

3. Premier dispositif de réseau (600) selon l'une des revendications 1 à 2, dans lequel, dans le second état, le premier dispositif de réseau (600) est configuré pour :
entrer dans le premier état si la seconde structure de données est vide ; et/ou
rester dans le second état, si la seconde structure de données n'est pas vide.

4. Premier dispositif de réseau (600) selon l'une des revendications 1 à 3, configuré en outre pour :
utiliser un minuteur et définir le minuteur lors de la transmission d'un nouveau paquet de données et/ou lors de la retransmission d'un paquet de données manquant ; et
ajouter tous les paquets de données pour lesquels un accusé de réception n'a pas été reçu à la seconde structure de données, lorsque le minuteur expire.

5. Premier dispositif de réseau (600) selon la revendication 4, configuré en outre pour :
définir le minuteur avec une valeur supérieure à un temps d'aller-retour.

6. Procédé (1300) mis en œuvre par un premier dispositif de réseau (600), le procédé (1300) comprenant :
la transmission (1301) d'une séquence de paquets de données (601) à un second dispositif de réseau (610) ;
la réception (1302) d'au moins un message de notification (602), en provenance du second dispositif de réseau (610), dans lequel l'au moins un message de notification (602) indique un numéro de séquence L le plus grand d'un paquet de données parmi des numéros de séquence de paquets de données qui ont été reçus au niveau du second dispositif de réseau (610) et un ou plusieurs paquets de données (603) de la séquence de paquets de données qui sont manquants au niveau du second dispositif de réseau (610) jusqu'au numéro de séquence L le plus grand ; et
la retransmission (1303) d'un ou plusieurs paquets de données manquants (603) comme étape suivante après la réception de l'au moins un message de notification (602), dans lequel chacun des un ou plusieurs paquets de données manquants (603) est indiqué comme paquet de données manquant après sa première transmission par l'au moins un message de notification (602), et un numéro de séquence X de chaque paquet de données manquant (603) est inférieur à L - K, où K est un paramètre qui est un entier non négatif ;
le maintien d'une première structure de données qui indique les paquets de données manquants qui sont indiqués par l'au moins un message de notification (602) ;
la mise à jour de la première structure de données en réponse à l'au moins un message de notification (602) ;
le maintien d'une seconde structure de données qui indique des paquets de données à retransmettre ;
l'ajout des un ou plusieurs paquets de données (603) dans la seconde structure de données, lorsque les un ou plusieurs paquets de données sont indiqués comme paquets de données manquants après leur première transmission par l'au moins un message de notification (602), et que le numéro de séquence X de chaque paquet de données manquant (603) est inférieur à L - K ; et
la suppression d'un paquet de données à retransmettre de la seconde structure de données après la retransmission du paquet de données à retransmettre ;
dans lequel le procédé comprend en outre :
le fonctionnement dans un premier état et dans un second état,
dans lequel, dans le premier état, le procédé comprend en outre :
la transmission de nouveaux paquets de données ;
le fait d'entrer dans le second état, lorsque la seconde structure de données n'est pas vide ; et
le fait de rester dans le premier état, lorsque la seconde structure de données est vide ;
dans lequel, dans le second état, le procédé comprend en outre : la retransmission des paquets de données manquants selon la seconde structure de données.

7. Programme d'ordinateur comprenant un code de programme pour mettre en œuvre, lorsqu'il est exécuté sur un ordinateur, le procédé (1300) selon la revendication 6.
